# EUROPÄISCHE PATENTANMELDUNG

(11) **EP 2 146 091 A2**
(43) Veröffentlichungstag der Anmeldung: **20.01.2010**
(21) Anmeldenummer: 09009058.0
(22) Anmeldetag: 10.07.2009
(51) Int. Cl.: F03D 3/02, F03D 3/06

(54) **Windkraftanlage**

(30) Priorität: 17.07.2008 DE 102008033532
(71) Anmelder: Lehmkuhl, Andreas, 27777 Ganderkesee (DE)
(72) Erfinder: Lehmkuhl, Andreas, 27777 Ganderkesee (DE)
(74) Vertreter: Lasch, Hartmut

(57) **Zusammenfassung**

Eine Windkraftanlage besitzt eine um eine vertikale Drehachse drehbare Flügelanordnung, die zumindest einen Mittelflügel und zumindest einen Außenflügel umfasst. Der Außenflügel besitzt einen Querschnitt mit einer der Drehachse zugewandten Innenseite, einer zumindest abschnittsweise konvex gekrümmten Außenseite, einem in Drehrichtung weisenden abgerundeten Kopfabschnitt und einem hinteren Endbereich. Im hinteren Endbereich ist auf der Außenseite des Querschnitts ein nach außen hervorstehender Nasenabschnitt ausgebildet.

## Beschreibung

Die Erfindung betrifft eine Windkraftanlage mit einer um eine vertikale Drehachse drehbaren Flügelanordnung, die zumindest einen Mittelflügel und zumindest einen Außenflügel umfasst, wobei der Außenflügel einen Querschnitt mit einer der Drehachse zugewandten Innenseite, einer zumindest abschnittsweise konvex gekrümmten Außenseite, einem in Drehrichtung weisenden abgerundeten Kopfabschnitt und einem hinteren Endbereich besitzt.

Neben den bekannten Windrädern, bei denen eine Flügelanordnung um eine im Wesentlichen horizontal verlaufende Drehachse drehbar ist, sind auch Windkraftanlagen bekannt, bei denen die Flügelanordnung um eine vertikale Drehachse dreht. Eine derartige Windkraftanlage weist in der Regel eine Bauhöhe von 2 bis 6m auf und ist insbesondere für die Erzeugung von elektrischem Strom bei Kleinverbrauchern, beispielsweise Privathäusern, gedacht und beispielsweise aus der WO 89/07713 A1 bekannt.

Die in der WO 89/07713 A1 gezeigte Flügelanordnung umfasst einen zentrisch zur vertikalen DrehDrehachse angeordneten Mittelflügel mit einem im Wesentlichen elliptischen Querschnitt und zwei Außenflügel, die punktsymmetrisch zur vertikalen DrehDrehachse angeordnet sind und einen modifizierten tropfenförmigen Querschnitt nach Art eines Flugzeugflügels aufweisen. Der Mittelflügel und die beiden Außenflügel sind konstruktiv zu einer gemeinsam drehenden Baueinheit zusammengefasst. Die Drehbewegung der Flügelanordnung wird mittels eines Generators in üblicher Weise in elektrischen Strom umgewandelt.

Bei abflauendem Wind bzw. bei Windstille dreht die Flügelanordnung zunächst noch aufgrund der Trägheit weiter, bis sie irgendwann zum Stillstand kommt. Wenn der Wind dann wieder auffrischt, soll die Flügelanordnung alleine aufgrund der auftretenden Windkraft selbsttätig anlaufen. In der Praxis hat es sich jedoch gezeigt, dass das selbsttätige Anlaufen der Flügelanordnung bei bestimmten Drehstellungen nicht oder nur unzureichend funktioniert. Es könnte erwogen werden, der Flügelanordnung einen Elektromotor zuzuordnen, der das Anlaufen nach einem Stillstand sicherstellt. Dies ist jedoch konstruktiv aufwändig und hinsichtlich der Energiebilanz nachteilig.

Der Erfindung liegt die Aufgabe zugrunde, eine Windkraftanlage der genannten Art zu schaffen, bei der ein Anlaufen der Flügelanordnung aus dem Stillstand bei auftretendem Wind zuverlässig gewährleistet ist.

Diese Aufgabe wird erfindungsgemäß durch eine Windkraftanlage mit den Merkmalen des Anspruchs 1 gelöst. Dabei ist vorgesehen, dass im hinteren Endbereich des Außenflügels auf der Außenseite des Querschnittes, d.h. auf der der DrehDrehachse abgewandten Seite, ein nach außen hervorstehender Nasenabschnitt ausgebildet ist, der sich vorzugsweise über die gesamte Höhe des Außenflügels erstreckt.

Durch den auf der Außenseite des Querschnittes angeordneten Nasenabschnitt, der nach außen, d.h. in der der Drehachse abgewandten Richtung hervorsteht, wird auch bei seitlichem Anströmen der Außenflügel durch den Wind eine geringe Kraft erzeugt, die zu einem Drehmoment um die Drehachse führt und somit die Flügelanordnung in Drehung versetzt. Es hat sich gezeigt, dass eine relativ geringe Abmessung des Nasenabschnittes ausreichend ist, um das Anlaufen der Flügelanordnung nach einem Stillstand sicher zu gewährleisten. In bevorzugter Ausgestaltung der Erfindung kann vorgesehen sein, dass der Nasenabschnitt 10mm bis 100mm und insbesondere nicht mehr als 50mm von der Außenoberfläche der Außenseite des Seitenflügels hervorsteht.

Der Außenflügel ist bei üblicher Ausgestaltung auf seiner Außenseite kontinuierlich konvex gekrümmt. Der Übergang von der konvex gekrümmten Außenseite des Außenflügels zu dem Nasenabschnitt kann durch eine Abwinkelung der Außenfläche erfolgen, bessere Strömungsverhältnisses sind doch gegeben, wenn der Nasenabschnitt über einen konkaven Oberflächenbereich insbesondere stetig in die konvexe Außenseite des Außenflügels übergeht.

Der Außenflügel bekannten Aufbaus verjüngt sich in seinem Querschnitt zum hinteren Ende und läuft an diesem entweder spitz zu oder ist dort mit kleinem Radius abgerundet. Erfindungsgemäß kann in Weiterbildung der Erfindung vorgesehen sein, dass an dem in Drehrichtung gesehenen hinteren Ende des Außenflügels eine Staufläche ausgebildet ist, die vorzugsweise nicht konvex abgerundet, sondern zumindest abschnittsweise eben ausgebildet ist, um dem anströmenden Wind eine Angriffsfläche zu geben. Die Staufläche sollte vorzugsweise eine radiale Breite, in Richtung senkrecht zur Drehachse von zumindest 20mm aufweisen. Es hat sich als sinnvoll erwiesen, wenn die Staufläche eine radiale Breite im Bereich von 20mm bis 100mm und insbesondere im Bereich von 20mm bis 50mm besitzt.

Der Nasenabschnitt kann einstückig in das die Außenseite des Außenflügels bildende Blech oder Profil eingearbeitet sein. Alternativ ist jedoch auch möglich, dass der Nasenabschnitt von einem leistenförmigen Ansatzstück gebildet ist, das auf die Außenseite des Außenflügels aufgesetzt und dort befestigt ist. Die Befestigung kann durch Schrauben, Kleben oder Rasten erreicht werden. Durch die nachträgliche Anbringung des Ansatzstückes zur Ausbildung des Nasenabschnittes ist der Vorteil gegeben, dass jede Windkraftanlage hinsichtlich der Größe und Formgebung des Nasenabschnittes an ihren Aufbauort nachträglich angepasst werden kann.

Eine weitere Anbringungsart des leistenförmigen Ansatzstückes kann darin bestehen, dass es formschlüssig mit dem Außenflügel in Eingriff steht. Zu diesem Zweck kann der Außenflügel eingeformte Längsnuten aufweisen, in die das Ansatzstück mit entsprechenden Eingriffvorsprüngen eingesetzt oder eingeschoben wird.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: den grundsätzlichen Aufbau einer Flügelanordnung einer Windkraftanlage in schematisch perspektivischer Ansicht,
- Fig. 2: einen Querschnitt durch einen Außenflügel gemäß einer ersten Ausführungsform der Erfindung,
- Fig. 3: das hintere Ende des Außenflügels gemäß Fig. 2 in vergrößerter Darstellung,
- Fig. 4: das hintere Ende eines Außenflügels gemäß einer zweiten Ausführungsform der Erfindung,
- Fig. 5: das hintere Ende eines Außenflügels gemäß einer dritten Ausführungsform der Erfindung und
- Fig. 6: das hintere Ende eines Außenflügels gemäß einer vierten Ausführungsform der Erfindung

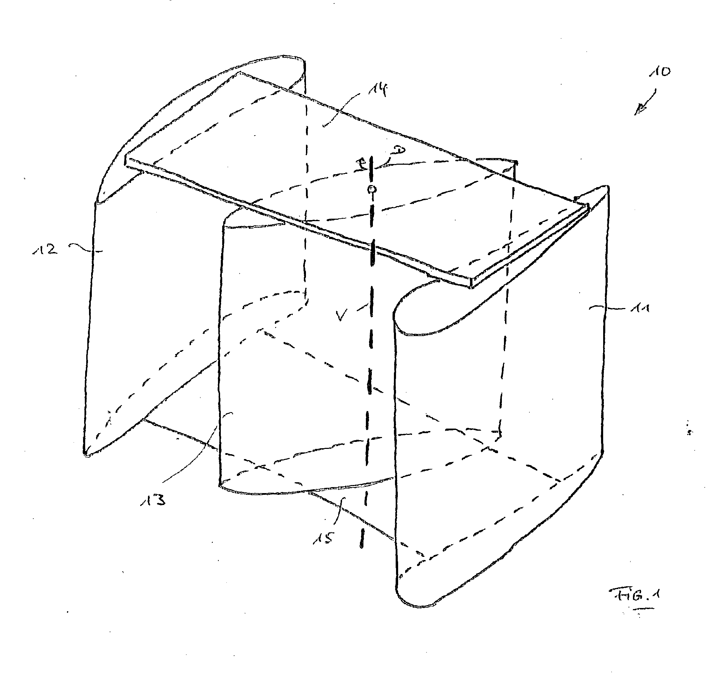

Fig. 1 zeigt den grundsätzlichen Aufbau einer Windkraftanlage mit vertikaler Drehachse V. Die Windkraftanlage umfasst eine Flügelanordnung 10, die um die vertikale Drehachse V drehbar ist und zwei Außenflügel 11 und 12 aufweist, die auf entgegengesetzten Seiten mit Abstand zur DrehDrehachse V angeordnet und bezüglich dieser punktsymmetrisch ausgebildet sind. Jeder Außenflügel 11 und 12 besitzt einen über seine Höhe konstanten Querschnitt nach Art eines modifizierten tropfenförmigen Profils ähnlich dem Querschnitt eines Flugzeugflügels. Die breiteren Querschnittsabschnitte der Außenflügel 11 und 12 weisen dabei in entgegengesetzte Horizontalrichtungen.

Zwischen den beiden Außenflügeln 11 und 12 ist ein Mittelflügel 13 angeordnet, der ebenfalls einen über seine Höhe konstanten Querschnitt besitzt und zentrisch zur DrehDrehachse V angeordnet ist. Im dargestellten Ausführungsbeispiel ist der Mittelflügel 13 so ausgerichtet, dass seine längere HauptDrehachse unter einem Winkel von ca. 45° zu einer die Mittelpunkte der Querschnitte der Außenflügel 11 und 12 verbindenden Geraden ausgerichtet ist. Der Mittelflügel 13 und die Außenflügel 11 und 12 sind auf ihrer Unterseite durch eine Tragkonstruktion beispielsweise in Form einer Bodenplatte 15 und auf ihrer Oberseite durch eine weitere Tragkonstruktion beispielsweise in Form einer Deckenplatte 14 zu einer einstückigen Baueinheit verbunden, die als Einheit um die vertikale DrehDrehachse V drehbar ist, wie es durch den Pfeil D in Fig. 1 angedeutet ist.

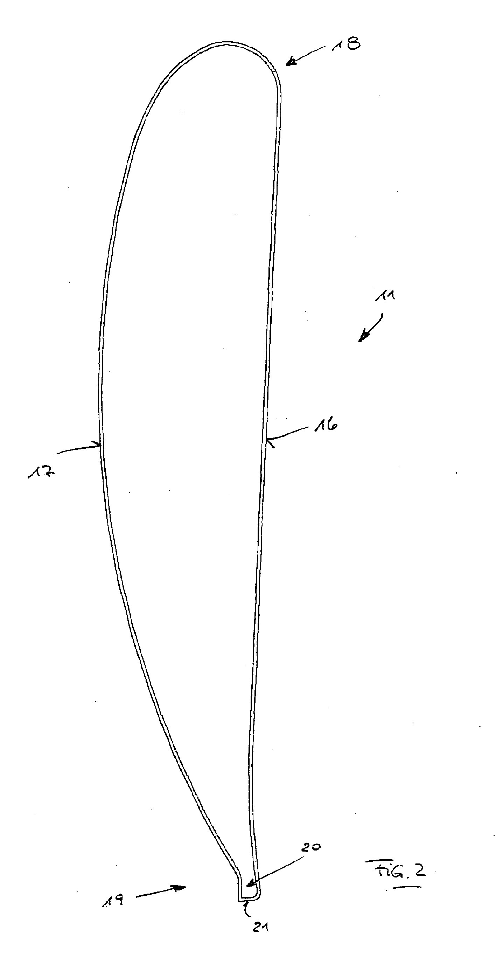

Fig. 2 zeigt den Querschnitt des Außenflügels 11. Dieser weist eine Innenseite 16 auf, die der DrehDrehachse V zugewandt ist und entweder gerade oder geringfügig konkav gekrümmt verläuft. Auf der äußeren, der DrehDrehachse V abgewandten Außenseite 17 besitzt der Außenflügel 11 eine konvex gekrümmte Form. Die Innenseite 16 und die Außenseite 17 sind am vorderen, in Drehrichtung weisenden Ende über einen konvex abgerundeten Kopfabschnitt 18 miteinander verbunden.

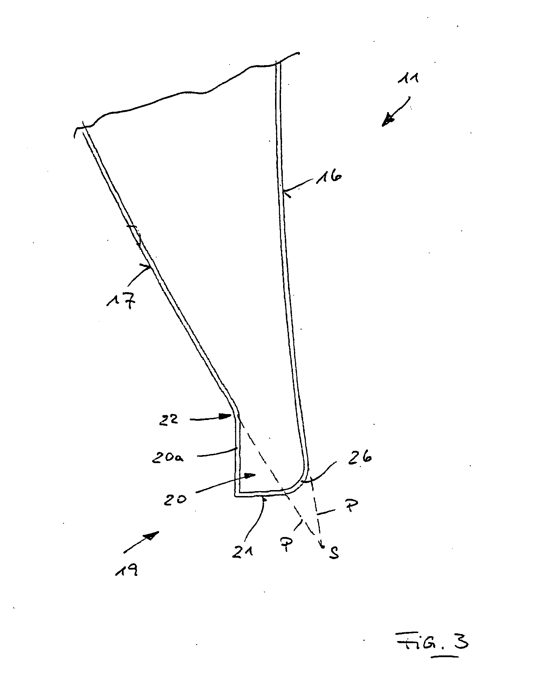

Im hinteren Endbereich 19 sind die Innenseite 16 und die Außenseite 17 zusammengeführt. Fig. 3 zeigt die gestrichelten Projektionslinien P, die den Verlauf der Außenseite 17 und der Innenseite 16 angeben, wenn diese unter Beibehaltung ihrer Krümmungen weitergeführt wären und sich in einem Punkt S treffen würden. Bei dem Querschnitt des Außenflügels 11 gemäß der Erfindung ist dieser Verlauf jedoch abgewandelt. Die konvexe Außenseite 17 geht nahe dem hinteren Ende des Außenflügels 11 mittels einer Ausbiegung in Form eines konkaven Oberflächenbereichs 22 in einen Nasenabschnitt 20 über, wobei die dadurch gebildete, hervorstehende Nasenwand 20a der Außenseite 17 außerhalb des durch die Projektionslinien P definierten fiktiven Querschnitts liegt.

Die Innenseite 16 ist nahe ihrem hinteren Ende über eine Umbiegung 26 in Richtung der Nasenwand 20a geführt und trifft in einem spitzen Winkel, beispielsweise unter 90° auf diese, wodurch am unteren Ende des Außenflügels 11 eine Staufläche 21 gebildet ist.

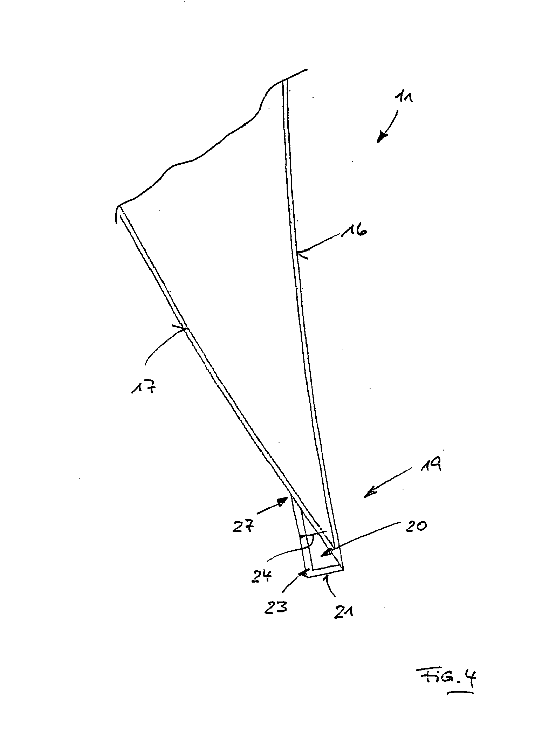

Bei der Ausführungsform gemäß den Figuren 2 und 3 ist der Nasenabschnitt 20 einstückiger Bestandteil der Wandungen des Außenflügels 11, indem die entsprechenden Bleche oder Verkleidungsplatten zur Bildung des Nasenabschnitts 20 gebogen und verbunden werden. Fig. 4 zeigt eine alternative Ausgestaltung, bei der der Nasenabschnitt 20 nachträglich an dem Außenflügel 11 angebracht werden kann. Der Außenflügel 11 gemäß Fig. 4 besitzt zunächst am unteren Ende einen sich stetig verjüngenden, spitz zulaufenden Querschnitt, der von der konkaven Innenseite 16 und der konvexen Außenseite 17 begrenzt ist. Am unteren Ende des Außenflügels 11 ist ein leistenförmiges Ansatzstück 23 über Befestigungsmittel 24 angebracht. Das leistenförmige Ansatzstück 23 erstreckt sich über die gesamte Höhe des Außenflügels 11 und bildet den Nasenabschnitt 20. Im dargestellten Ausführungsbeispiel besitzt das Ansatzstück 23 einen dreieckigen Querschnitt, so dass zwischen der Außenseite des Ansatzstücks 23 und der Außenseite 17 des Außenflügels 11 auf dessen Oberfläche eine nach außen gerichtete Abwinkelung 27 gebildet ist. Der dem hinteren Ende des Außenflügels 11 zugewandte Schenkel des Querschnittes des Ansatzstückes 23 bildet die hintere Staufläche 21.

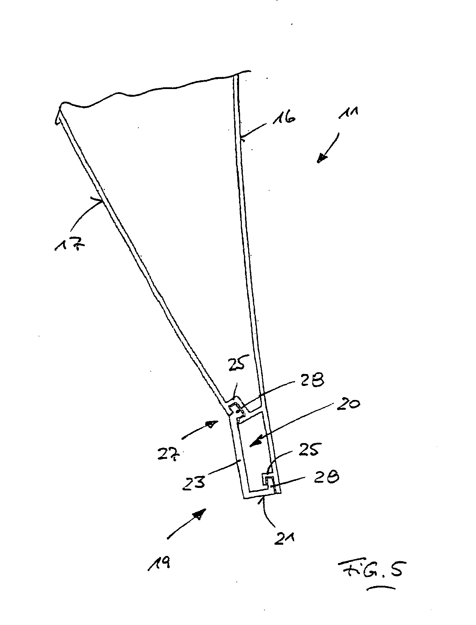

Fig. 5 zeigt eine alternative Anbringung des leistenförmigen Ansatzstückes 23 an dem Außenflügel 11. Bei dieser Ausgestaltung sind in dem Außenflügel 11 sowohl auf dessen Außenseite 17 als auch am unteren Ende oder auf der Innenseite 16 mehrere mit einem Hinterschnitt versehene Eingriffsnuten 25 ausgebildet, in die das Ansatzstück 23 mit entsprechenden Vorsprüngen 28 eingeführt werden kann, wodurch das Ansatzstück 23 formschlüssig an dem Außenflügel 11 angebracht ist.

Bei dem in Fig. 5 dargestellten Ausführungsbeispiel ist das Ansatzstück 23 ebenfalls mit einem im Wesentlichen dreieckigen Querschnitt ausgebildet, so dass auf der äußeren Oberfläche des Außenflügels 11 ein abgewinkelter Übergang 27 zwischen dessen Außenseite 17 und der Außenseite des Ansatzstückes 23 gebildet ist. Am hinteren Ende des Ansatzstückes 23 ist in genannter Weise die Staufläche 21 gebildet.

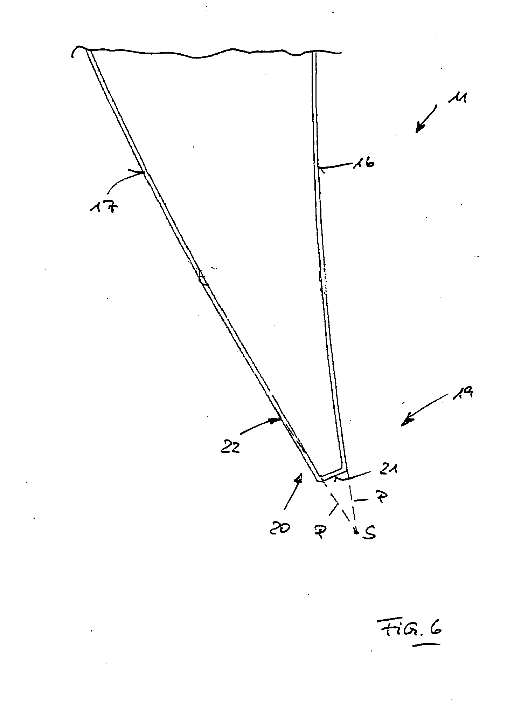

In Abhängigkeit von der Größe und Formgebung des Außenflügels 11 kann es gegebenenfalls ausreichen, den Nasenabschnitt 20 mit sehr geringen Dimensionen auszubilden. Eine entsprechende Ausgestaltung ist in Fig. 6 dargestellt. Dort sind wiederum die Projektionslinien P der Innenseite 16 und der konvexen Außenseite 17 des Außenflügels 11 dargestellt. In geringem Abstand vom unteren Ende des Außenflügels 11 geht der konvexe Verlauf der Außenseite 17 in einen geringfügig konkaven Oberflächenbereich 22 über, so dass die Außenseite 17 zwischen dem konkaven Oberflächenbereich 22 und dem hinteren Ende des Außenflügels 11 um ein geringes Maß außerhalb der Projektionslinie P des konvexen Verlaufes der Außenseite 17 verläuft. Dieser außerhalb der Projektionslinie P liegende Abschnitt der Außenseite 17 bildet den Nasenabschnitt 20. Am unteren Ende des Außenflügels 11 ist die Staufläche 21 gebildet, die sowohl mit der Innenseite 16 als auch mit der Außenseite 17 des Außenflügels 11 beispielsweise unter einem spitzen Winkel verbunden ist.

## Patentansprüche

1. Windkraftanlage mit einer um eine vertikale Drehachse (V) drehbaren Flügelanordnung (10), die zumindest einen Mittelflügel (13) und zumindest einen Außenflügel (11, 12) umfasst, wobei der Außenflügel (11, 12) einen Querschnitt mit einer der Drehachse (V) zugewandten Innenseite (16), einer zumindest abschnittsweise konkav gekrümmten Außenseite (17), einem in Drehrichtung (D) weisenden abgerundeten Kopfabschnitt (18) und einem hinteren Endabschnitt (19) besitzt, **dadurch gekennzeichnet, dass** im hinteren Endabschnitt (19) auf der Außenseite (17) des Querschnitts ein nach außen hervorstehender Nasenabschnitt (20) ausgebildet ist.

2. Windkraftanlage nach Anspruch 1, **dadurch gekennzeichnet, dass** der Nasenabschnitt (20) sich über die gesamte Höhe des Außenflügels (11, 12) erstreckt.

3. Windkraftanlage nach Anspruch 1 oder 2, **dadurch gekennzeichnet, dass** der Nasenabschnitt (20) über einen konkaven Oberflächenbereich (22) in die konvexe Außenseite (17) des Außenflügels (11, 12) übergeht.

4. Windkraftanlage nach einem der Ansprüche 1 bis 3, **dadurch gekennzeichnet, dass** an dem in Drehrichtung (D) gesehenen hinteren Ende des Außenflügels (11, 12) eine Staufläche (21) ausgebildet ist.

5. Windkraftanlage nach Anspruch 4, **dadurch gekennzeichnet, dass** die Staufläche (21) eine radiale Breite von zumindest 20mm aufweist.

6. Windkraftanlage nach einem der Ansprüche 1 bis 5, **dadurch gekennzeichnet, dass** der Nasenabschnitt (20) von einem leistenförmigen Ansatzstück (23) gebildet ist, das auf die Außenseite (17) des Außenflügels (11, 12) aufgesetzt ist.

7. Windkraftanlage nach 6, **dadurch gekennzeichnet, dass** das leistenförmige Ansatzstück (23) formschlüssig mit dem Außenflügel (11, 12) in Eingriff steht.
